# EUROPEAN PATENT SPECIFICATION

(11) **EP 0 389 230 B1**
(45) Date of publication and mention of the grant of the patent: **24.05.1995**
(21) Application number: 90302948.6
(22) Date of filing: 19.03.1990
(51) Int. Cl.: B01F 3/04, B01F 5/04, C02F 3/12, B01F 5/02

(54) **Dissolution of gas**
Gasauflösung
Dissolution de gaz

(30) Priority: 21.03.1989 GB 8906483
(43) Date of publication of application: 26.09.1990
(73) Proprietor: The BOC Group plc, Windlesham Surrey GU20 6HJ (GB)
(72) Inventor: Race, Michael Jack, Rotherham, South Yorkshire (GB)
(74) Representative: Wickham, Michael

(56) References cited:
- WO-A-89/04208
- DE-A- 2 725 592
- US-A- 4 139 579
- US-A- 4 152 259
- US-A- 4 163 712
- US-A- 4 226 719

## Description

This invention relates to a method and apparatus for dissolving a gas, for example oxygen, in a liquid, for example water or other aqueous medium. The invention is limited neither to the example of oxygen as the gas nor to the example of an aqueous medium as the liquid but may be used to dissolve other gases having a greater or lesser solubility than oxygen in aqueous or non-aqueous media.

Our UK patent GB-A-1 455 567 discloses a process for treating liquid including the steps of taking a stream of the liquid, pressurising the stream, introducing a treatment gas into the pressurised stream so as to dissolve therein some of the gas, and introducing the stream containing dissolved and undissolved gas into a volume of the liquid under turbulent conditions such that the undissolved gas enters the volume of liquid in the form of fine bubbles that either dissolve or are consumed within the volume of liquid. The method is typically used to dissolve oxygen in an aqueous medium. The oxygenated stream is typically introduced back into the main volume of liquid through one or more orifices or jets. Undissolved oxygen bubbles are transported in the stream to the orifices or jets. The length of the conduit through which the stream flows from the point of oxygenation to the jet or jets is chosen so as to facilitate dissolution of some of the gas in the liquid without being so long that the gas bubbles tend to coalesce into separate pockets or slugs of gas or that the pressure drop is disproportionate to the amount of gas that dissolves in the conduit.

The process described in GB-A-1 455 567 has been commercially successful particularly in the oxygenation of water to improve the treatment of sewage. We attribute this success at least in part to the fact that the process admits much more gas to be retained in the body of the liquid than prior process operating with same power consumption. By using the stream as a carrier of gas bubbles a much higher quantity of gas can be successfully dissolved than if the amount of gas carried in the stream is merely limited to that which can be dissolved therein.

Another advantage afforded by the process according to GB-A-1 455 567 is that the stream returning to the main volume of liquid agitates the liquid, thereby helping to keep solids in suspension and assisting in the distribution of oxygen throughout the volume. However, a difficulty arises when a large volume of liquid, for example an activated sludge tank used in the treatment of sewage having a volume of more than 1000m³ cubic metres, a sewage lagoon, or a long stretch of river requires oxygenation. The difficulty is that more than one oxygenation apparatus with its own separate pump is required. The requirement arises out of the fact that if several subsidiary oxygenated streams are returned to the main volume of liquid at widely spaced locations, there is a high frictional loss in the associated pipework with a result that the subsidiary streams do not impart sufficient energy to the main volume of the liquid to cause the desired degree of agitation.

US-A-4 152 259 discloses an apparatus for aerating waste water in which air is directed into a large distribution main and then divided so as to flow along a plurality of relatively long distribution arms having means for introducing gas into the flow and for agitating the flow so as to assist in the dispersion of the gas therein.

US-A-4 226 719, to R B Woltman, discloses an apparatus for mixing air with a liquid in which air is drawn into a chamber surrounding the throat of a convergent-divergent nozzle having liquid passing therethrough in such a manner as to enable the air to be mixed with said liquid. Unfortunately this apparatus is unable to create fine bubbles and is therefore unable to maximise the dissolution of the gas in the liquid.

According to the present invention there is provided a method of dissolving a gas in a volume of a liquid comprising; pressurising the liquid; forming a main stream of the liquid; distributing the main stream into a plurality of subsidiary streams; passing each of the subsidiary streams through a venturi including a throat configured to create turbulence therein; introducing the gas into the throat; each of the subsidiary streams being introduced into the volume of the liquid at a velocity sufficient to create further turbulence causing bubbles of said gas to shear into smaller bubbles characterised by the steps of distributing said liquid into the subsidiary streams at a velocity greater than that of the main stream and before the introduction of the gas into the throat and introducing said gas into a chamber surrounding the throat and then introducing said gas into the liquid at the throat through a plurality of apertures.

The invention also provides an apparatus for carrying out the method according to Claim 1 comprising: a pump having an inlet in communication with the volume of the liquid and a pump outlet; a main conduit having an inlet in communication with the pump outlet; and a plurality of subsidiary conduits in communication with the main conduit each of which includes a venturi having a throat configuration to create turbulence in the flowing liquid, means for introducing the gas into the turbulence; and a nozzle terminating in the volume of the liquid and having an outlet configured such that the liquid is introduced into the volume of liquid at a velocity sufficient to create further turbulence characterised in that said subsidiary conduits are dimensioned such that the liquid accelerates in flowing from the main conduit to each of the subsidiary conduits and there is further provided a chamber surrounding the throat into which said gas is introduced and a plurality of apertures at said throat for linking said chamber and said throat.

The method and apparatus according to the invention are particularly suited for use in oxygenating waste water. By introducing oxygen into the subsidiary conduits only, it is possible to keep the liquid flow velocity in the main relatively low, say just above the value necessary to scour the main of any deposited solids, and thereby keep down frictional losses of the pumping energy such that a relatively high proportion of this energy can be used in agitating the liquid.

Preferably, the velocity of flow in the mainstream is in the range of 0.65 to 1.3m s⁻¹ (2 to 4 feet per second).

Advantageously, each subsidiary stream is introduced into said volume of liquid in the form of one or more jets, each having a velocity in the range of 10 to 20 meters per second.

The method and apparatus according to the invention will now be described by way of example with reference to the accompanying drawings in which:
Figure 1 is a schematic drawing, partly in perspective, of a first oxygenation apparatus according to the invention;
Figure 2 is a schematic drawing, partly in perspective, of a second oxygenation apparatus according to the invention;
Figure 3 is a schematic perspective view of a third oxygenation apparatus according to the invention;
Figure 4 is a schematic perspective view of a fourth oxygenation apparatus according to the invention;
Figure 5 is a plan view of part of a fifth oxygenation apparatus according to the invention;
Figure 6 is a sectional elevation of a nozzle for use in the oxygenation apparatuses shown in Figures 4 and 5.

The drawings are not to scale.

In the ensuing description of the drawings, like parts in different drawings are referred to by the same reference numeral.

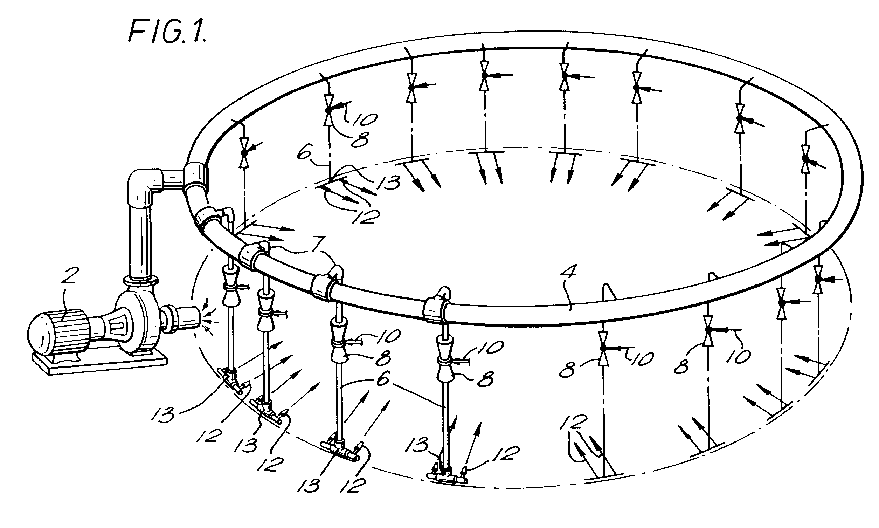

Referring to Figure 1 of the drawings, the illustrated apparatus may be located wholly within a large volume of liquid for example that contained in a sewage treatment tank for use in the activated sludge process. A sewage pump 2 having a suction inlet forms a stream of waste water at a pressure of typically 2 x 10⁵ to 4 x 10⁵ Pa (2-4 atmospheres absolute). The stream enters a ring main 4. The velocity of flow of liquid in the ring main 4 is sufficient to prevent the build-up of solids in the ring main 4. The ring main 4 is adapted to feed the liquid to a plurality or multiplicity of equally-spaced subsidiary conduit 6 which depend generally vertically therefrom though each such conduit is formed with an upstream elbow 7 contiguous with the main 4. Each conduit 6 is typically less than five metres in length and has a venturi 8 disposed therein at an upper region thereof. Each venturi 8 has an inlet 10 for gaseous oxygen. The oxygen inlets 10 are connected to a common oxygen main (not shown) which is typically supplied from a plant for separating air by pressure swing adsorption (or by using membranes) or is a storage vessel containing liquid oxygen and fitted with an evaporator whereby the oxygen may be supplied to the conduit 6 in gaseous state. Each venturi 8 creates a restriction in its associated conduit 6 whereby turbulence is imparted to the liquid flowing therethrough. It is also to be appreciated that the conduit 6 is preferably formed of a diameter substantially less than that of the ring main 4 whereby the liquid is accelerated as it flows from the ring main 4 into the conduit 6. The flow of oxygen to the turbulent region from the inlet 10 breaks the oxygen into bubbles. The suction created by the flow of liquid through the venturi may be used to create or assist the flow of oxygen.

Each conduit 6 has a downstream T-piece pipe 13 at its bottom end in which is received one or more outlet nozzles for passing liquid-gas mixture into the main volume of liquid in which the ring main is immersed. Each nozzle 12 has an outlet diameter much smaller than that of the diameter of the associated conduit 6 whereby the liquid-gas mixture leaves the nozzle 12 at a relatively high velocity thereby creating turbulence, helping further to break up or shear bubbles in the mixture into even smaller bubbles that are readily consumed by or dissolve in the main body of liquid and providing agitation for the main body of liquid. Typically, the nozzles 12 are disposed in such a way that an adequate degree of agitation can be maintained within the main vessel without the need to resort to additional mechanical agitators.

In one example of the method according to the invention a tank having a diameter of 30 metres is fitted with a ring main which has a circumference of about 88 metres. There are 16 equally-spaced subsidiary conduits 6 depending from the ring main 4. The ring main has an internal diameter of 200mm (8 inches) and is typically formed of PVC tubing. Each conduit 6 has above its venturi 10 a diameter of 75mm (3 inches) and below the venturi 8 a diameter of 50mm (2 inches) The outlet of each nozzle 12 typically has a diameter typically in the range of 10 to 45 millimetres and in this example 25mm. The pump 2 is operated so as to maintain a liquid velocity of 0,65m/s (2 feet per second) within the ring main 4. Such a velocity is usually sufficient to scour any deposited solids from the ring main, though if desired greater velocities eg up to 1,3m/s (4 feet per) second may be used. The apparatus shown in Figure 1 may for example be used to dissolve 5 tonnes per day of oxygen in, and mix, a volume of 3000 m³ of waste water employing a pump 2 capable of delivering 1110 m³ per hour of water to the ring main 4 at a pressure of approximately 2.5 x 10⁵ Pa (2 and half atmospheres absolute) (14 mwg).

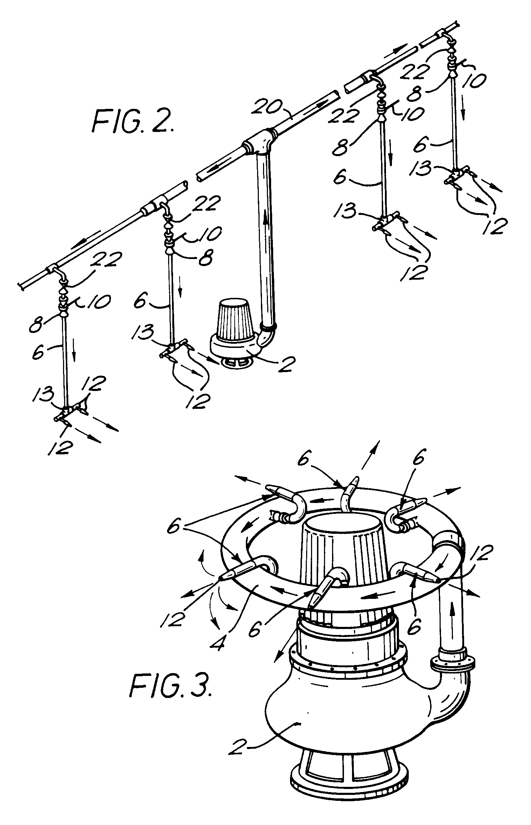

Referring to Figure 2 of the drawings, there is shown an apparatus essentially similar to that of Figure 1 save that an elongate main 20 is used instead of the ring main 4. In order to equalise the flows to the subsidiary conduits 6, which flows tend to be more variable than when a ring main is used, each conduit 6 is provided with a manually-operable flow control valve 22. The valves 22 can be set to compensate for the effect of pressure drop as the pumped liquid flows ever further away from the pump 2. If desired, the T-piece 13 may be constructed with a swivel or other joint whereby the direction in which each pair of nozzles 12 point can be set independently of the others. In other respects, the operation and construction of the apparatus shown in Figure 2 is analogous to that shown in Figure 1. The apparatus shown in Figure 2 can for example be used to oxygenate rivers, lagoons, harbours, multiple fish ponds, large activated sludge tanks, and estuaries.

In Figure 3, there is shown another alternative apparatus to that shown in Figure 1. The main difference between the two apparatuses is that the conduits 6 are shorter in length in the apparatus shown in Figure 3 than in that shown in Figure 1. The conduits 6 are each generally J-shaped and end in a single nozzle 12 and are received in an inwardly facing part of the surface of the ring main 4. The nozzles 12 each face outwardly of the ring main. Although not shown in Figure 3, each conduit 6 has a venturi connected to an oxygen main at its throat. The conduits 6 may be constructed with a joint or bearing whereby the direction in which each nozzle 12 points may be adjusted independently, either up or down or to the left or right. Such an arrangement facilitates oxygenation and mixing of the entire volume of liquid in which the apparatus shown in Figure 3 is immersed. In a typical example of the operation of an apparatus as shown in Figure 3, the pump 2 delivers 280 m³ /hour of water to the ring main at a pressure of approximately 2.5 x 10⁵ Pa (2 and half atmospheres absolute) (14 mwg) and dissolves 1 tonne/day of oxygen in a volume of 500 m³ of water. Typically, in operation, a liquid stream in which are dispersed fine gas bubbles leaves each nozzle 12 at a velocity of about 12m s⁻¹.

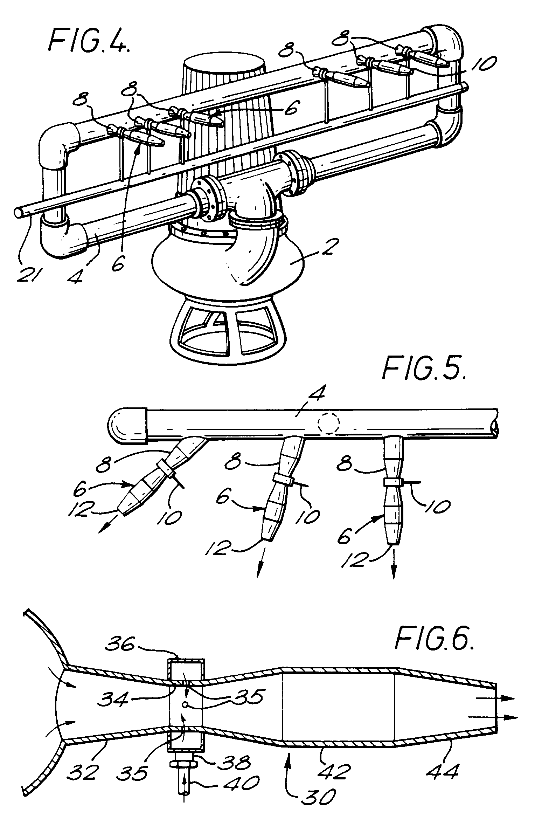

Referring to Figure 4 of the drawings there is shown an apparatus generally similar to those illustrated in Figures 1 and 3. In the apparatus shown in Figure 4, the main 4 is endless and defines the shape of a rectangle. The main 4 is disposed generally vertically. Each conduit 6 is disposed generally horizontally and is formed as a one-piece construction with its associated venturi 8 and nozzle 12, these three parts all being coaxial with one another. Oxygen is supplied to the inlets 10 from a main 21. As shown in Figure 5, the nozzles 12 may be arranged in a fanned arrangement with respect to one another.

The nozzle devices shown in Figures 4 and 5 are shown in more detail in Figure 6 of the drawings. The tubular device 30 shown in Figure 6 has an upstream venturi 32 whose inlet is joined to the main 4. The throat 34 of the venturi 32 is formed with apertures 35 which communicate with an annular gas distribution chamber 36 surrounding the throat 34. The chamber 36 has an inlet 38 communicating with a gas distribution pipe 40. The downstream end of the venturi 32 is contiguous with a right cylindrical portion 42 of the tubular device 30, which portion 42 is contiguous with a nozzle 44 which tapers in the downstream direction. In operation, a stream of water or liquid under pressure flows from the main 4 into the upstream end of the venturi 32. The throat 34 creates turbulence in the stream. Oxygen or other gas to be dissolved is introduced into the stream by passage from the chamber 36 through the apertures 35. The suction created by the flow of liquid through the venturi 32 may be sufficient to induce a flow of oxygen into the stream, or the oxygen may be supplied under a superatmospheric pressure sufficient to ensure its entry into the stream. The throat 34 of the venturi 32 acts a restriction which creates turbulence in the stream, thus facilitating the break-up of the gas into bubbles. In the portion 42 of the device 30 the flow of the stream is rendered less turbulent. This portion 42 may have a length in the range of 0.3 to 1 m, and thus being relatively short keeps to a minimum pressure drop. The stream of liquid then enters the body of liquid, in which the apparatus according to the invention is immersed, through the nozzle 44 as a jet with a velocity typically in the range of 10 to 20 m s⁻¹. Such a velocity helps to create turbulence at the exit of the nozzle 44 which tends to shear the oxygen bubbles into bubbles of smaller size, while enabling the oxygen bubbles to penetrate into regions of the volume of liquid to be treated remote from the nozzle. The energy in the jet is thus dissipated in a relatively large volume of liquid which helps to keep the liquid well mixed.

Referring again to Figures 3 and 4, the pumps 2 shown therein are of a kind which can stand at the bottom of a tank or on a specially provided platform (not shown) such that the whole apparatus can be lowered into a tank of water to be oxygenated, so that the only connections to be made to services outside the tank are to the oxygen source and to the power line for the pump 4. Thus, installation of an apparatus of the kind shown in Figure 3 or 4 is particularly simple to carry out.

## Claims

1. A method of dissolving a gas in a volume of a liquid comprising; pressurising the liquid; forming a main stream of the liquid; distributing the main stream into a plurality of subsidiary streams; passing each of the subsidiary streams through a venturi (8) including a throat configured to create turbulence therein; introducing the gas into the throat; each of the subsidiary streams being introduced into the volume of the liquid at a velocity sufficient to create further turbulence causing bubbles of said gas to shear into smaller bubbles characterised by the steps of distributing said liquid into the subsidiary streams at a velocity greater than that of the main stream and before the introduction of the gas into the throat, and introducing said gas into a chamber (36) surrounding the throat and then introducing said gas into the liquid at the throat through a plurality of apertures (35).

2. A method as claimed in Claim 1 further characterised in that the velocity of flow of the main stream is in the range 2 to 4 feet per second (0.65 to 1.3 m s⁻¹).

3. A method as claimed in Claim 1 or Claim 2 further characterised in that each subsidiary stream is introduced into said volume of liquid in the form of one or more jets, each having a velocity in the range of 10 to 20 metres per second.

4. An apparatus for carrying out the method according to Claim 1 comprising: a pump (2) having an inlet in communication with the volume of the liquid and a pump outlet; a main conduit (4) having an inlet in communication with the pump outlet; and a plurality of subsidiary conduits (6) in communication with the main conduit (4) each of which includes a venturi (8) having a throat configuration (34) to create turbulence in the flowing liquid, means for introducing the gas into the turbulence; and a nozzle (12) terminating in the volume of the liquid and having an outlet configured such that the liquid is introduced into the volume of liquid at a velocity sufficient to create further turbulence characterised in that said subsidiary conduits (6) are dimensioned such that the liquid accelerates in flowing from the main conduit to each of the subsidiary conduits (6) and there is further provided a chamber (36) surrounding the throat into which said gas is introduced and a plurality of apertures (35) at said throat for linking said chamber (36) and said throat (34).

5. Apparatus as claimed in Claim 4, further characterised in that each subsidiary conduit (6) is less than 2 metres in length.

6. Apparatus as claimed in Claim 5, further characterised in that the position of each nozzle (12) is adjustable independently of the other nozzles (12) both up and down and to the left and right.

7. Apparatus as claimed in any of Claims 4 to 6, further characterised in that each venturi (8) is integral with an associated nozzle (12).

8. Apparatus as claimed in any one of Claims 4 to 7, further characterised in that the upstream end of each venturi (8) is contiguous with the main (4).

## Patentansprüche

1. Ein Verfahren zum Auflösen eines Gases in einem Volumen einer Flüssigkeit, welches die Schritte umfaßt, daß die Flüssigkeit unter Druck gesetzt wird, daß ein Hauptstrom der Flüssigkeit gebildet wird, daß der Hauptstrom in eine Vielzahl von Nebenströmen verteilt wird, daß jeder der Nebenströme durch eine Venturi-Einrichtung (8) geführt wird, welche eine Mündung umfaßt, die so konfiguriert ist, daß sie eine Turbulenz darin erzeugt, daß das Gas in die Mündung eingeführt wird, wobei jeder der Nebenströme in das Volumen der Flüssigkeit mit einer Geschwindigkeit eingeführt wird, die ausreicht, um eine weitere Turbulenz zu erzeugen, welche bewirkt, daß sich Blasen des Gases in kleinere Blasen aufteilen, **gekennzeichnet** durch die Schritte,
daß die Flüssigkeit in die Nebenströme mit einer Geschwindigkeit, die größer als diejenige des Hauptstromes ist, und vor der Einführung des Gases in die Mündung verteilt wird, und daß das Gas in eine Kammer (36) eingeführt wird, welche die Mündung umgibt, und dann das Gas in die Flüssigkeit an der Mündung durch eine Vielzahl von Öffnungen (35) eingeführt wird.

2. Ein Verfahren wie in Anspruch 1 beansprucht,
ferner dadurch gekennzeichnet,
daß die Strömungsgeschwindigkeit des Hauptstromes in dem Bereich 2 bis 4 Fuß pro Sekunde (0,65 bis 1,3 ms⁻¹) liegt.

3. Ein Verfahren wie in Anspruch 1 oder Anspruch 2 beansprucht,
ferner dadurch gekennzeichnet,
daß jeder Nebenstrom in das Flüssigkeitsvolumen in Form eines oder mehrerer Strahlen eingeführt wird, von denen jeder eine Geschwindigkeit in dem Bereich von 10 bis 20 Meter pro Sekunde aufweist.

4. Eine Vorrichtung zum Ausführen des Verfahrens gemäß Anspruch 1 mit:
einer Pumpe (2), die einen Einlaß in Kommunikation mit dem Volumen der Flüssigkeit und einen Pumpenauslaß aufweist, mit einer Hauptleitung (4), die einen Einlaß in Kommunikation mit dem Pumpenauslaß aufweist, mit einer Vielzahl von Nebenleitungen (6) in Kommunikation mit der Hauptleitung (4), von denen jede eine Venturi-Einrichtung (8) umfaßt, die eine Mündungskonfiguration (34) aufweist, um eine Turbulenz in der strömenden Flüssigkeit zu erzeugen, mit Mitteln zum Einführen des Gases in die Turbulenz, und mit einer Düse (12), die in dem Volumen der Flüssigkeit endet und einen Auslaß aufweist, der so konfiguriert ist, daß die Flüssigkeit in das Flüssigkeitsvolumen mit einer Geschwindigkeit eingeführt wird, die ausreicht, um eine weitere Turbulenz zu erzeugen, dadurch **gekennzeichnet**,
daß die Nebenleitungen (6) so dimensioniert sind, daß die Flüssigkeit während des Strömens von der Hauptleitung zu jeder der Nebenleitungen (6) beschleunigt, und daß ferner eine Kammer (36), welche die Mündung umgibt, in die das Gas eingeführt wird, und eine Vielzahl von Öffnungen (35) an der Mündung vorgesehen sind, um die Kammer (36) und die Mündung (34) zu verbinden.

5. Vorrichtung wie in Anspruch 4 beansprucht,
ferner dadurch gekennzeichnet,
daß jede Nebenleitung (6) eine Länge von weniger als zwei Meter aufweist.

6. Vorrichtung wie in Anspruch 5 beansprucht,
ferner dadurch gekennzeichnet,
daß die Position jeder Düse (12) unabhängig von den anderen Düsen (12) sowohl nach oben und unten als auch nach links und rechts einstellbar ist.

7. Vorrichtung wie in einem der Ansprüche 4 bis 6 beansprucht,
ferner dadurch gekennzeichnet,
daß jede Venturi-Einrichtung (8) einstückig mit einer zugehörigen Düse (12) ausgebildet ist.

8. Vorrichtung wie in einem der Ansprüche 4 bis 7 beansprucht,
ferner dadurch gekennzeichnet,
daß das Stromaufwärtsende jeder Venturi-Einrichtung (8) an die Hauptleitung (4) grenzt.

## Revendications

1. Procédé de dissolution d'un gaz dans un volume de liquide, comprenant la mise du liquide sous pression, la formation d'un courant principal du liquide, la distribution du courant principal en plusieurs courants auxiliaires, la circulation de chacun des courants auxiliaires dans un venturi (8) qui possède un col dont la configuration permet la création d'une turbulence, l'introduction du gaz dans le col, chaque courant auxiliaire étant introduit dans le volume du liquide à une vitesse suffisante pour créer une turbulence supplémentaire qui provoque l'arrachement de bulles de gaz sous forme de bulles de dimension réduite, caractérisé par des étapes de distribution du liquide dans les courants auxiliaires à une vitesse supérieure à celle du courant principal et avant l'introduction du gaz dans le col, et d'introduction du gaz dans une chambre (36) qui entoure le col puis d'introduction du gaz dans le liquide au niveau du col par plusieurs ouvertures (35).

2. Procédé selon la revendication 1, caractérisé en outre en ce que la vitesse du courant principal est comprise entre 0,65 et 1,3 m/s (deux à quatre pieds par seconde).

3. Procédé selon la revendication 1 ou 2, caractérisé en ce que chaque courant auxiliaire est introduit dans ledit volume de liquide sous forme d'un ou plusieurs jets, ayant chacun une vitesse comprise entre 10 et 20 m/s.

4. Appareil destiné à la mise en oeuvre du procédé selon la revendication 1, comprenant une pompe (2) ayant une entrée qui communique avec le volume de liquide et une sortie de pompe, un conduit principal (4) ayant une entrée qui communique avec la sortie de la pompe, et plusieurs conduits auxiliaires (6) qui communiquent avec le conduit principal (4), chacun comprenant un venturi (8) ayant une configuration de col (34) permettant la création d'une turbulence dans le liquide qui circule, un dispositif d'introduction du gaz dans la turbulence, et une buse (12) aboutissant dans le volume du liquide et ayant une sortie dont la configuration est telle que le liquide est introduit dans le volume de liquide à une vitesse suffisante pour créer une turbulence supplémentaire, caractérisé en ce que les conduits auxiliaires (6) ont des dimensions telles que le liquide accélère lorsqu'il s'écoule du conduit principal vers chacun des conduits auxiliaires (6), et il comporte en outre une chambre (36) entourant le col dans laquelle le gaz est introduit et plusieurs ouvertures (35) disposées au niveau du col pour la liaison de la chambre (36) et du col (34).

5. Appareil selon la revendication 4, caractérisé en outre en ce que chaque conduit auxiliaire (6) a une longueur inférieure à 2 m.

6. Appareil selon la revendication 5, caractérisé en ce que la position de chaque buse (12) est réglable indépendamment des autres buses (12), à la fois vers le haut et vers le bas, et vers la gauche et vers la droite.

7. Appareil selon l'une quelconque des revendications 4 à 6, caractérisé en ce que chaque venturi (8) est solidaire d'une buse associée (12).

8. Appareil selon l'une quelconque des revendications 4 à 16, caractérisé en outre en ce que l'extrémité amont de chaque venturi (8) est contigué à la canalisation principale (4).
